Europäisches Patentamt

European Patent Office

Office européen des brevets

(19)

(11) Veröffentlichungsnummer: **0 188 198 B1**

(12) **EUROPÄISCHE PATENTSCHRIFT**

(45) Veröffentlichungstag der Patentschrift: **17.06.92**

(51) Int. Cl.5: **C08J 5/18**, G11B 5/704, C08L 67/02

(21) Anmeldenummer: **86100072.7**

(22) Anmeldetag: **04.01.86**

(54) **Polyesterfolie.**

(30) Priorität: **15.01.85 DE 3501018**

(43) Veröffentlichungstag der Anmeldung:
**23.07.86 Patentblatt 86/30**

(45) Bekanntmachung des Hinweises auf die
Patenterteilung:
**17.06.92 Patentblatt 92/25**

(84) Benannte Vertragsstaaten:
**DE FR GB IT LU NL**

(56) Entgegenhaltungen:
**EP-A- 125 482**
**EP-A- 176 017**
**EP-A- 0 112 167**
**US-A- 4 233 352**
**US-A- 4 320 207**

**PATENT ABSTRACTS OF JAPAN, Band 6, Nr.
15 (C-89)[893], 28. Januar 1982**

(73) Patentinhaber: **HOECHST AKTIENGESELL-
SCHAFT**
**Postfach 80 03 20**
**W-6230 Frankfurt am Main 80(DE)**

(72) Erfinder: **Dallmann, Hermann, Dr.**
**Erbsenacker 29**
**W-6200 Wiesbaden(DE)**
Erfinder: **Schäfer, Werner, Dr.**
**Rosenstrasse 10**
**W-6238 Hofheim-Diedenbergen(DE)**
Erfinder: **Gawrisch, Wolfgang, Dr.**
**Am Dalberger 10**
**W-6501 Gau-Bischofsheim(DE)**
Erfinder: **Hensel, Hartmut, Dr.**
**Am Rotenberg 2**
**W-6229 Schlangenbad 3(DE)**

EP 0 188 198 B1

**Beschreibung**

Die vorliegende Erfindung bezieht sich auf eine Polyesterfolie mit verbesserter Dimensionsstabilität, Abriebfestigkeit, Streckbarkeit und verbesserten Gleiteigenschaften.

Biaxial oder multiaxial orientierte Folien aus Polyester, z.B. Polyethylenterephthalat, werden wegen ihrer überlegenen Eigenschaften wie ihrer Zugfestigkeit, ihrer Reißfestigkeit, ihres Elastizitätsmoduls, ihrer Transparenz, ihrer chemischen und thermischen Beständigkeit auf dem Verpackungssektor und verschiedenen technischen Gebieten wie z.B. dem reprografischen Sektor als Dielektrikum für Kondensatoren, als Trägerfolien für magnetische Aufzeichnungsmedien wie z.B. für Video-, Audio- und Computerbänder, für Magnetkarten sowie Floppy Disks und dergleichen eingesetzt.

Die Polyesterfolien müssen für die verschiedenen Einsatzgebiete spezifische Anforderungen erfüllen, die sich über die Rohstoffrezeptur oder die Verfahrensparameter während der Folienherstellung einstellen lassen.

Eine der Voraussetzungen für eine einwandfreie Handhabung der Folien während der Produktion, der Verarbeitung und der Anwendung ist ein ausreichend niedriger Reibungskoeffizient der Folienoberfläche. Je rauher die Folienoberfläche ist, umso besser ist das Wickelverhalten und damit die Ausbeute in der Produktion.

Polyesterfolien für Magnetbänder müssen außer einem niedrigen Reibungskoeffizienten und guten mechanischen Eigenschaften noch eine gleichmäßige Oberflächenrauhigkeit sowie eine gute Abriebfestigkeit und Dimensionsstabilität aufweisen.

Die Einstellung einer diesen Anforderungen genügenden Oberflächentopografie erfolgt bei Magnetbandträgerfolien durch

- Einarbeitung von vorzugsweise anorganischen Pigmenten wie Calciumcarbonat, Siliciumdioxid, Kaolin, Bariumsulfat, Titandioxid u.a.,
- eine gesteuerte Präzipitatfällung aus Katalysatorrückständen und Monomeren oder Oligomeren der eingesetzten Polyester (Erzeugung sogenannter innerer Teilchen).

Die Anwendung anorganischer Pigmente führt während des Streckprozesses leicht zur Ausbildung von Hohlräumen (voids) an den Stellen, an denen die Matrix vom Pigmentkorn abreißt. Bei der weiteren Verarbeitung der Folie wie z.B. beim Beschichten, d.h. dem Auftragen der Magnetdispersion, können sich dann im oberflächennahen Bereich Teile des Polymerüberzuges ablösen und, infolge des hierdurch bedingten Abriebs, die Qualität der Bänder bei der Beschichtung und damit ihre elektromagnetischen Eigenschaften unkontrolliert verschlechtern.

Die mehr oder weniger breite Korngrößenverteilung anorganischer Pigmente sowie die Neigung zur Bildung von Agglomeraten trotz aufwendiger Aufbereitungsverfahren wirken sich ebenfalls negativ auf die Folienqualität aus.

Die Erzeugung sogenannter innerer Teilchen (Katalysatorpräzipitat) definierter Größe und Menge ist verfahrenstechnisch aufwendig.

Die US-A-4,320,207 beschreibt statt des Zusatzes anorganischer Partikel zu Polyesterfolien organische Teilchen in einer Menge von 0,001 bis 4 Gew.%, die durch Pulverisieren von vernetzten Polymeren erzeugt werden und einen mittleren Durchmesser von 0,1 bis 5 $\mu$m besitzen. Die EP-A-125 482 betrifft einen Polyesterrohstoff, der 0,005 bis 5,0 Gew.-% an organischen, vernetzten Polymerteilchen mit einer engen Korngrößenverteilung im Bereich von 0,02 bis 2,0 $\mu$m enthält. Folien, die vernetzte kugelförmige Partikel mit enger Korngrößenverteilung sowie funktionellen Gruppen zur besseren Einbindung in Matrix enthalten, weisen eine definierte Oberflächenrauhigkeit und damit gute elektromagnetische Eigenschaften auf. Da sie weiterhin einen guten Schlupf sowie eine exzellente Transparenz haben, sollten sie als Basisfilme für Verpackungsmaterialien sowie technische Anwendungen wie Fotofilme, Magnetbänder u.a. bestens geeignet sein, zumal sich ihre mechanischen Eigenschaften über die Verfahrensparameter des Herstellprozesses einstellen lassen.

In der Praxis hat sich jedoch gezeigt, daß die Folien ein unzureichendes Abriebverhalten sowie eine unbefriedigende Dimensionsstabilität aufweisen und damit für viele Anwendungen ungeeignet sind.

Die EP-A-176 017 beschreibt als Stand der Technik nach Artikel 54(3) EPÜ, daß die Dimensionsstabilität und die Abriebfestigkeit von Polyesterfolien durch Zusatz von 0,01 bis 10 Gew.-% an Nukleierungsmitteln verbessert werden. Derartige Folien weisen allerdings noch keine optimalen Gleiteigenschaften auf.

Der vorliegenden Erfindung liegt daher die Aufgabe zugrunde, eine Polyesterfolie mit sehr gleichmäßiger Oberfläche zu schaffen, die sowohl gute Gleiteigenschaften als auch eine ausgezeichnete Abriebfestigkeit, eine verbesserte Dimensionsstabilität und Streckbarkeit aufweist.

Gelöst wird diese Aufgabe durch eine Folie der eingangs genannten Gattung, die 0,005 bis 5,0 Gew.-% an organischen, vorzugsweise gehärteten oder vernetzten, Partikeln enger Korngrößenverteilung von $D_w/D_n$

< 1,1 im Bereich von 0,01 bis 5,0 $\mu$m sowie ein Nukleierungsmittel in einer Menge von 0,01 bis 10 Gew.-%, beide Angaben bezogen auf das Gewicht des die Folie bildenden thermoplastischen Polymeren, enthält.

Als thermoplastische Polyestermaterialien werden im Rahmen der Erfindung Polyester-Homo- und Copolymere, Gemische verschiedener Polyester sowie Abmischungen oder Blends von Polyestern mit anderen Polymeren angesehen.

Die Herstellung der Polyester kann sowohl nach dem Umesterungsverfahren z.B. mit Hilfe der katalytischen Wirkung von z.B. Zn-, Ca-, Mn-, Li- oder Ge-Salzen als auch nach dem Direktesterverfahren erfolgen.

Beispiele für Polyester sind Mono- oder Polykondensate aus Terephthalsäure oder Isophthalsäure, 2,6-Naphthalindicarbonsäure mit Glykolen mit 2 bis 10 Kohlenstoffatomen wie Polyethylenterephthalat, Polytetramethylenterephthalat, Polybutylenterephthalat, Poly-1,4-cyclohexylen-dimethylenterepthalat, Polyethylen-2,6-naphthalindicarboxylat oder Polyethylen-p-hydroxybenzoat.

Die Copolyester können als Bausteine auch Adipinsäure, Sebazinsäure, Phthalsäure, Isophthalsäure, 5-Na-sulfoisophthalat, polyfunktionelle Komponenten wie Trimellithsäure u.a. enthalten.

Die Polyestergemische können beispielsweise aus Polyethylenterephthalat und Polybutylenterephthalat oder Polyethylenterephthalat und wenigstens einem Alkalimetallsalz eines Derivats der Sulfonsäure, wie z.B. der Sulfosiophthalsäure, bestehen.

Beispiele für Polymere, die in den Polyester eingearbeitet oder eingemischt werden können, sind Polyolefin-Homo- oder Copolymere wie Polyethylen, Polypropylen, Poly-4-methylpenten, Ethylen-Vinylacetat-Copolymere, die ihrerseits verseift sein können, Ionomere, Polyamide, Polycarbonate, Polytetrafluorethylen, Polysulfone u.a.

Die in der Folie enthaltenen gehärteten Teilchen können beispielsweise aus Melamin-Formaldehyd-Harz, Benzoguanamin-Formaldehyd-Harz, Phenol-Formaldehyd-Harz oder einem Epoxyharz bestehen.

Die vernetzten organischen Partikel können als Bausteine u.a. ungesättigte nichtionische Monomere wie Ester der Acryl- und Methacrylsäure wie Methylmethacrylat und Butylacrylat, die Ester von ungesättigten Dicarbonsäuren wie Maleinsäuredialkylester, ungesättigte Vinylverbindungen wie Styrol, ungesättigte Nitrile wie Acrylnitril, funktionelle Monomere wie ungesättigte Carbonsäuren, hydroxylhaltige Monomere wie Hydroxyethylmethacrylat, epoxidgruppenhaltige Monomere wie Glycidylmethacrylat, ungesättigte Sulfonsäuren u.a. enthalten.

Beispiele für vernetzende Komponenten sind Diallylphthalat, Divinylbenzol u.a.

Komponenten, die funktionelle Gruppen tragen und zu diesem Zweck in die Teilchen einpolymerisiert werden, daß sie bevorzugt in der Polyestersynthese kovalente Bindungen zwischen Polyestermatrix und vernetzten Teilchen ausbilden können, sind Hydroxyethylenmethacrylat, Acrylsäure und Methacrylsäure.

Der Härtungs- und Vernetzungsgrad der Teilchen kann durch die Zusammensetzung, insbesondere der härtenden und vernetzenden Komponente in weiten Grenzen variiert werden.

Wesentlich ist, daß die organischen Partikel, die gehärtet oder vernetzt sein können, während der Polymersynthese nicht löslich und nicht schmelzbar sind und auch beim Aufschmelzen des Polymeren, insbesondere bei der Herstellung von Formkörpern wie Folien oder der Regenerierung von Abfällen, erhalten bleiben.

Die Teilchen können mittels der bekannten Verfahren wie z.B. durch Emulsions- als auch Suspensionspolymerisation hergestellt werden. In die Polymermatrix können sie bei der Polymerherstellung in Form von wäßrigen oder glykolischen Dispersionen oder über ein Konzentrat eingearbeitet werden. Die Einarbeitung während der Polymersynthese führt zu einer besonders guten Einbindung in die Matrix sowie guten Verteilung in dem Polymeren selbst.

Die polymeren, vorzugsweise vernetzten oder gehärteten Feststoffpartikel weisen einen Durchmesser im Bereich von 0,01 bis 5 $\mu$m, vorzugsweise von 0,02 bis 3,0 $\mu$m, bei enger Korngrößenverteilung auf. Der Quotient aus dem Gewichtsmittel des Teilchendurchmessers ($D_w$) und dem Zahlenmittel des Teilchendurchmessers ($D_n$) beträgt < 1,1. Zur Bestimmung von $D_w$ und $D_n$ siehe U.E. Woods, J.S. Dodge, I.M. Krieger, P. Pierce, Journal of Paint Technology, Vol. 40, No. 527, S. 545 (1968).

Je nach Bedarf können nur Partikel einheitlicher Größe oder Mischungen eng verteilter Partikel eingesetzt werden.

Die Folie enthält vorstehend beschriebene Partikel in einer Menge von 0,005 bis 5 Gew.-%, bevorzugt von 0,02 bis 3 Gew.-%, bezogen auf das Gewicht der Folie.

Als Nukleierungsmittel können z.B. Alkali- oder Erdalkalisalze von Esterwachsen oder teilverseiften Esterwachsen, z.B. der Montansäure, ionische Copolymerisate aus Ethylen und Alkalisalzen der Methacrylsäure, Alkalisalze von Phenolsulfonsäuren, Alkalisalze oder Erdalkalisalze von Benzoaten oder Stearaten, Sorbitolabkömmlingen oder anorganischen Nukleierungsmitteln eingesetzt werden.

Als anorganische Nukleierungsmittel eignen sich z.B. Erdalkalicarbonate und Oxide wie Titandioxid und Aluminiumoxid, Talkum und Silikate, Bornitrid u.a.

Die Montansäure ist ein Säuregemisch, das hauptsächlich aus aliphatischen Monocarbonsäuren einer Kettenlänge zwischen 26 und 23 Kohlenstoffatomen besteht. Geeignete Montanwachssalze enthalten als Kationen vor allem Metalle der 1. bis 3. Hauptgruppe des Periodensystems, vorzugsweise Li, Na, K, Be, Mg, Ca und Al. Bevorzugt wird Na-Montanat verwendet. Als teilneutralisierte Montanwachssalze werden durch Reaktion der Montansäure mit 0,1 bis 1 Äquivalent Alkalihydroxid oder -oxid, vorzugsweise mit 0,25 bis 0,9 Äquivalent Natronlauge hergestellte Salze, verwendet.

Geeignete Montanwachsestersalze erhält man durch teilweise Veresterung der Montansäure mit bis zu 0,90 Äquivalent, vorzugsweise 0,5 bis 0,8 Äquivalent, zweiwertiger Alkohole mit 2 bis 4 Kohlenstoffen in der Alkylen-Gruppe und anschließende Neutralisierung mit Oxiden oder Hydroxiden der genannten Metalle. Besonders geeignete Diole sind z.B. Ethylenglykol, 1,2- bzw. 1,3-Propandiol und 1,3- bzw. 1,4-Butandiol.

Nukleierungsmittel auf Basis von Montansäure und deren Einsatz in Folien sind z.B. beschrieben in der JP-A-56139551 (siehe auch Chem.Abstr. 96: 53440 g). In dieser Druckschrift sind die Transparenz und der Reibungskoeffizient von mit den genannten Zusätzen hergestellten Folien beschrieben.

Es hat sich aber überraschend gezeigt, daß sich aus Polyestermaterialien mit Zusatz an gehärteten oder vernetzten organischen Partikeln sowie Nukleierungsmitteln Folien herstellen lassen, die eine besonders gute Abriebfestigkeit sowie eine verbesserte Dimensionsstabilität und Streckbarkeit bei gleichzeitig exzellenter Transparenz aufweisen. Die Zusätze an Nukleierungsmitteln, die bevorzugt im Bereich von 0,1 bis 5,0 Gew.-%, bezogen auf das Gewicht des Polyesters, liegen, können dem Polyestermaterial während oder nach der Herstellung zugesetzt werden. In der Praxis hat es sich im Hinblick auf optimale Dimensionsstabilität und Abriebfestigkeit als vorteilhaft erwiesen, das Nukleierungsmittel entweder in Form eines Masterbatches zuzugeben oder es auf das getrocknete Granulat durch Zumischen aufzubringen.

Die Folien der vorliegenden Erfindung können neben den Nukleierungsmitteln noch Mittel zur Optimierung der Schlupf- und Gleiteigenschaften wie z.B. inerte anorganische Partikel, die auch in kolloidaler Form vorliegen können, Katalysatorrückstandsteilchen u.a. sowie weitere übliche Zusätze wie Antioxidantien, Antistatika, Thermostabilisatoren, Farbstoffe u.a. enthalten.

Die erfindungsgemäße Folie wird nach dem Extrusionsverfahren hergestellt, wobei das mit dem Nukleierungsmittel abgemischte Polyestermaterial aufgeschmolzen, zu einer Vorfolie extrudiert und auf einer Kühlwalze abgeschreckt wird. Dieser Film wird anschließend in Längsrichtung und/oder in Querrichtung bei Temperaturen zwischen dem Glaspunkt des Polymeren und 160°C sowie einem Streckverhältnis vorzugsweise im Bereich von 2,0 bis 6,0 verstreckt und anschließend bei Temperaturen zwischen 150 und 240°C hitzefixiert. Die Anzahl und Reihenfolge der Längs- und Querstreckstufen ist nicht fest vorgegeben, sondern richtet sich nach den Erfordernissen. Die einzelnen Streckvorgänge "längs" und "quer" können ein- oder mehrstufig durchgeführt werden. Eine gleichzeitige Längs- und Querstreckung (Simultanstreckung) ist ebenso möglich.

Die aus den Streckverfahren resultierenden Folien können nur in einer Richtung eine Festigkeit aufweisen (monoaxial gestreckt), in beiden Richtungen ausgewogene mechanische Eigenschaften aufweisen (balanced Folien) oder in Quer- und/oder Längsrichtung besondere Festigkeiten aufweisen (tensilized oder supertensilized Folien).

Die Folien können auch zwei- oder mehrschichtig sein, wobei verschieden nukleierte bzw. rezepturierte oder verschieden nukleierte bzw. rezepturierte und gar nicht nukleierte bzw. rezepturierte Polyestermaterialien durch Coextrusion oder Kaschierung zu Mehrschichtfolien verbunden sein können.

Durch die Schichtenbildung können besonders die Vorteile der verschiedenen Nukleierungsmittel und Additive gezielt auf den jeweiligen Verwendungszweck der Folie eingesetzt werden.

Der Aufbau der coextrudierten Folien kann hierbei sowohl symmetrisch als auch unsymmetrisch sein.

Bei der Durchführung der im vorstehenden beschriebenen Verfahren ist es besonders überraschend, daß beim Abkühlen der Polyesterschmelze auf der Kühlwalze durch das Nukleierungsmittel keine verstärkte Kristallitbildung beobachtet wird. Die Dichte der Vorfolie liegt unter 1,34 g/cm$^3$. Auch bei der Streckung der Folie werden keine negativen Einflüsse durch das Nukleierungsmittel und die damit vorliegenden Keime für die Bildung von Kristalliten beobachtet. Diese Keime kommen erst bei dem Verfahrensschritt der Hitzefixierung zum Tragen, wobei die Schrumpfungstendenz der Folie stark reduziert wird.

Innerhalb der einzelnen Streckstufen besteht ein bestimmtes Verhältnis zwischen Dichte, Orientierung und Kristallitgröße bzw. -anzahl. Dieses Verhältnis läßt sich durch erfindungsgemäß der Folie zugefügte Nukleierungsmittel regulieren.

Überraschenderweise wird das mechanische Eigenschaftsbild der Folie nicht verschlechtert.

Neben der verbesserten Abriebfestigkeit, Dimensionsstabilität und Streckbarkeit der Folie sind weitere Vorteile der vorliegenden Erfindung, daß bei der Trocknung des Polyestergranulats bei höheren Temperaturen durch den Zusatz der Nukleierungsmittel eine geringere Neigung zu Verklebungen der Polyesterteilchen festgestellt wird. Dadurch kann der Durchsatz in diesem Arbeitsgang erhöht werden. Somit lassen sich mit der vorliegenden Erfindung höhere Produktionsgeschwindigkeiten bei gleicher Folienqualität und damit eine Verbesserung der Wirtschaftlichkeit erreichen.

Die Oberflächeneigenschaften und Oberflächenrauhigkeiten können über zusätzliche Beschichtung der Folien mit Lösungen oder Dispersionen, die u.a. vernetzbare, härtbare oder bereits gehärtete oder vernetzte Substanzen bzw. Partikel enthalten, beeinflußt werden.

Beispiele hierfür sind Copolyester, Polyurethane, wärmehärtbare Acrylsäureabkömmlinge, Polysiloxane, Styrol-Butadien-Kautschuke oder Substanzen, die - wie oben beschrieben - in das Polymere eingearbeitet werden können.

Die Dispersionen oder Lösungen können zur Verbesserung der Eigenschaften der aufgetragenen Schicht organische Additive wie z.B. Na-Montanat, Fettsäureester, Silan- oder Siloxan-Kopplungsreagenzien sowie anorganische Additive wie z.B. kolloidale $SiO_2$-, $TiO_2$-Partikel enthalten.

Die Beschichtungen können im In-line-Verfahren, d.h. zwischen den Streckstufen oder nach der Orientierung, erfolgen.

Die im vorstehenden in allen Einzelheiten beschriebenen erfindungsgemäßen Folien eignen sich insbesondere zur Verwendung als Trägerfolie für magnetische Aufzeichnungsmaterialien, für reprografische und fotografische Zwecke, als Elektrofolie oder Prägefolie. Die Folie kann aber genausogut auch vorteilhaft als Verpackungsfolie oder als Teil einer Verpackungsfolie verwendet werden.

Die Erfindung wird durch nachstehende Beispiele, die nicht einschränkend sind, näher beschrieben. Eingesetzt wird hierbei ein Rohstoff, der feinverteilte vernetzte Polymerteilchen auf Acrylatbasis enthält, die durch Emulsionspolymerisation hergestellt wurden und eine enge Korngrößenverteilung aufweisen. Sie wurden während der Herstellung des Polyesters über Dispersionen in den Rohstoff unter definierten Bedingungen eingearbeitet. Das Abriebverhalten der Folien wurde an einem Meßgerät ermittelt, bei dem ein 12,5 mm breites Folienband mit einer konstanten Bahnspannung (1 N) zunächst über eine Reinigungswalze aus Gummi, dann über einen feststehenden Umlenkstift aus einer Kassette gezogen, anschließend über zwei als Meßrollen dienende Gummirollen geführt und dann aufgerollt wurde. Die Beladung der Gummirollen mit abgeriebenem Material wurde nach einer Meßskala von 1 bis 5, d.h. von "sehr gut" bis "mangelhaft" beurteilt.

Beispiel 1 (M)

Einem Polyethylenterephthalatrohstoff der 1000 ppm an vernetzten, durch Emulsionspolymerisation hergestellten organischen Partikeln aus Methylmethacrylat, Butylacrylat und Hydroxymethylacrylat wurden 0,4 Gew.-%, bezogen auf das Gewicht des Polyesters, an Natriummontanat zugemischt. Das Gemisch wurde aufgeschmolzen, in einer Breitschlitzdüse zu einer Folie geformt und auf einer hochglanzpolierten Abkühlwalze zu einer amorphen Folie abgeschreckt. Die Vorfolie wurde anschließend stufenweise biaxial gestreckt, wobei ein Flächenstreckverhältnis von $\lambda = 13$ erreicht wurde. Die biaxial orientierte, ca. 14,4 $\mu$m dicke Folie wurde anschließend bei 195°C thermofixiert.

Vergleichsbeispiel 1 (V)

Wie in Beispiel 1 wurde eine stufenweise biaxial orientierte Folie ohne den Zusatz von Natriummontanat hergestellt.

Ergebnisse:

| | Schrumpf 105°C 30 min | | Schrumpf 150°C 15 min | | Streck-spannung bei 5% Dehnung | | E-Modul $N/mm^2$ | | Abrieb-festig-keit Note | Trübung % |
|---|---|---|---|---|---|---|---|---|---|---|
| | l | q | l | q | l | q | l | q | | |
| (M) | 0,5 | 0,1 | 2,0 | 0,2 | 110 | 100 | 4700 | 5200 | 1 | 6,2 |
| (V) | 0,8 | 0,4 | 3,0 | 1,3 | 110 | 100 | 4800 | 5200 | 4-5 | 5,5 |

l = längs

q = quer

Beispiel 2

Entsprechend Beispiel 1 wurde eine Folie geformt, die auf eine hochglanzpolierte Walze mit einer Oberflächentemperatur von 54°C aufgelegt wurde. Die amorphe Vorfolie wurde anschließend stufenweise bei 117°C und einem Flächenstreckverhältnis von λ = 4,7 längs und bei 95°C bei einem Querstreckverhältnis von λ = 3,6 gestreckt und bei 195°C thermofixiert.

Vergleichsbeispiel (V)

Wie in Beispiel 2 wurde eine stufenweise biaxial orientierte Folie ohne Zusatz von Natriummontanat hergestellt.

Ergebnisse

| | Schrumpf 105°C 30 min | | Schrumpf 150°C 15 min | | Abrieb-festig-keit | Trübung % | | Gleitrei-bungsko-effizient | |
|---|---|---|---|---|---|---|---|---|---|
| | l | q | l | q | | l | q | l | q |
| (M) | 0,55 | 0 | 2,0 | 0 | 1 | 5 | 3 | 0,35 | 0,35 |
| (V) | 0,7 | 0,2 | 3,0 | 1,9 | 4 | 4 | 3 | 0,50 | 0,55 |

l = längs

q = quer

Gleitreibung gemäß DIN 53375

**Patentansprüche**

1. Polyesterfolie mit verbesserter Abriebfestigkeit, Dimensionsstabilität, Streckbarkeit und verbesserten Gleiteigenschaften, die 0,005 bis 5,0 Gew.-% an organischen, vorzugsweise gehärteten oder vernetz-

6

EP 0 188 198 B1

ten, Partikeln enger Korngrößenverteilung von $D_w/D_n$ < 1,1 im Bereich von 0,01 bis 5 $\mu$m sowie ein Nukleierungsmittel in einer Menge von 0,01 bis 10 Gew.-%, beide Werte bezogen auf das Gewicht des die Folie bildenden Polymeren, enthält.

2. Folie nach Anspruch 1, dadurch gekennzeichnet, daß als Nukleierungsmittel Alkali- oder Erdalkalisalze von Esterwachsen oder teilverseiften Esterwachsen z.B. der Montansäure, ionische Copolymerisate aus Ethylen und Alkalisalzen der Methacrylsäure, Alkalisalzen von Phenolsulfonsäure und/oder anorganische Nukleierungsmittel eingesetzt werden.

3. Folie nach Anspruch 1 oder 2, dadurch gekennzeichnet, daß als Nukleierungsmittel Natriummontanat und/oder Copolymerisate aus Ethylen und Alkalisalzen der Methacrylsäure eingesetzt werden.

4. Folie nach einem der Ansprüche 1 bis 3, dadurch gekennzeichnet, daß sie 0,1 bis 5 Gew.-%, bezogen auf den Polyester, an Nukleierungsmittel enthält.

5. Folie nach einem der Ansprüche 1 bis 4, dadurch gekennzeichnet, daß sie gehärtete oder vernetzte organische Partikel, vorzugsweise auf Basis eines Melamin-Formaldehyd-Harzes, eines Benzoguanamin-Formaldehyd-Harzes, eines Phenol-Formaldehyd-Harzes, eines Epoxy-Harzes oder eines Acrylats, enthält.

6. Folie nach Anspruch 5, dadurch gekennzeichnet, daß die Partikel durch Suspensions- oder Emulsionspolymerisation hergestellt werden.

7. Folie nach einem der Ansprüche 1 bis 6, dadurch gekennzeichnet, daß sie monoaxial gestreckt ist.

8. Folie nach einem der Ansprüche 1 bis 6, dadurch gekennzeichnet, daß sie biaxial oder multiaxial gestreckt ist.

9. Folie nach einem der Ansprüche 1 bis 6, dadurch gekennzeichnet, daß sie thermofixiert ist.

10. Folie nach einem der Ansprüche 1 bis 9, dadurch gekennzeichnet, daß sie aus einem Homo- oder Copolykondensat aus Terephthalsäure oder Isophthalsäure mit Glykolen mit 2 bis 10 Kohlenstoffatomen besteht.

11. Folie nach einem der Ansprüche 1 bis 9, dadurch gekennzeichnet, daß sie aus Polyethylenterephthalat besteht.

12. Folie nach einem der Ansprüche 1 bis 9, dadurch gekennzeichnet, daß sie aus einem Gemisch verschiedener Polyester besteht.

13. Folie nach einem der Ansprüche 1 bis 12, dadurch gekennzeichnet, daß sie wenigstens ein weiteres thermoplastisches Polymeres enthält.

14. Folie nach einem der Ansprüche 1 bis 13, dadurch gekennzeichnet, daß sie anorganische Additive enthält.

15. Folie nach einem der Ansprüche 1 bis 14, dadurch gekennzeichnet, daß sie zusätzliche organische Additive zur Verbesserung ihrer Eigenschaften enthält.

16. Folie nach einem der Ansprüche 1 bis 15, dadurch gekennzeichnet, daß sie aus mehreren Schichten besteht.

17. Folie nach einem der Ansprüche 1 bis 16, dadurch gekennzeichnet, daß die Schichten aus unterschiedlichen Polymeren bestehen.

18. Folie nach Anspruch 16, dadurch gekennzeichnet, daß wenigstens eine Schicht ein Nukleierungsmittel enthält.

7

**19.** Folie nach Anspruch 16, dadurch gekennzeichnet, daß alle Schichten gleichzeitig extrudiert werden.

**20.** Folie nach einem der Ansprüche 1 bis 19, dadurch gekennzeichnet, daß sie ein- oder beidseitig mit einer Lösung oder Dispersion beschichtet wird, wobei in der Lösung oder Dispersion vernetzbare oder vernetzte Bestandteile enthalten sein können.

**21.** Verfahren zur Herstellung einer monoaxial oder multiaxial gestreckten fixierten Folie mit guter Abriebfestigkeit und verbesserter Dimensionsstabilität und Streckbarkeit nach einem der Ansprüche 1 bis 19, dadurch gekennzeichnet, daß das Nukleierungsmittel mit dem die organischen, vorzugsweise vernetzten oder gehärteten Partikel enthaltenden Polymeren gemischt wird, das Gemisch dann aufgeschmolzen, durch eine Breitschichtdüse zu einer Vorfolie extrudiert und auf einer Kühlwalze abgeschreckt wird und danach entweder monoaxial, simultan in Längs- und Querrichtung oder multiaxial gestreckt und anschließend zwischen 150 und 240°C thermofixiert wird.

**22.** Verwendung einer Folie nach den Ansprüchen 1 bis 20 als Trägerfolie für magnetische Aufzeichnungsmaterialien, reprografische und fotografische Zwecke, Elektrofolie oder Prägefolie.

**23.** Verwendung einer Folie nach den Ansprüchen 1 bis 20 als Verpackungsfolie oder Teil einer Verpackungsfolie.

## Claims

**1.** Polyester film possessing improved abrasion resistance, dimensional stability, stretchability and improved slip properties, which contains from 0.005 to 5.0 % by weight of organic, preferably cured or crosslinked, particles of a narrow grain size distribution with $D_w/D_n < 1.1$, the grain size being in the range of 0.01 to 5 $\mu$m, and a nucleating agent in an amount of 0.01 to 10 % by weight, the percentages each time being related to the weight of the polymer constituting the film.

**2.** The film as claimed in claim 1, characterized in that th nucleating agents used comprise alkali or alkaline earth metal salts of ester waxes or partially saponified ester waxes, e.g., of montan acid, ionic copolymers obtained from ethylene and alkali metal salts of methacrylic acid, alkali metal salts of phenolsulfonic acid and/or inorganic nucleating agents.

**3.** The film as claimed in claim 1 or 2, characterized in that sodium montanate and/or copolymers of ethylene and alkali metal salts of methacrylic acid are used as nucleating agents.

**4.** The film as claimed in any of claims 1 to 3, characterized in that it contains 0.1 to 5 % by weight, relative to the polyester, of nucleating agent.

**5.** The film as claimed in any of claims 1 to 4, characterized in that it contains hardened or crosslinked organic particles, which are preferably based on a melamine/formaldehyde resin, on a benzoguanamine/formaldehyde resin,on a phenol/formaldehyde resin or on an epoxy resin or acrylate.

**6.** The film as claimed in claim 5, characterized in that the particles are prepared by suspension or emulsion polymerization.

**7.** The film as claimed in any of claims 1 to 6, characterized in that it is stretched monoaxially.

**8.** The film as claimed in any of claims 1 to 6, characterized in that it is stretched biaxially or multiaxially.

**9.** The film as claimed in any of claims 1 to 6, characterized in that it is heat-set.

**10.** The film as claimed in any of claims 1 to 9, characterized in that it is comprised of a homo- or copolycondensate obtained from terephthalic acid or isophthalic acid and glycols having 2 to 10 carbon atoms.

**11.** The film as claimed in any of claims 1 to 9, characterized in that it is comprised of polyethylene terephthalate.

**12.** The film as claimed in any of claims 1 to 9, characterized in that it is comprised of a blend of various polyesters.

**13.** The film as claimed in any of claims 1 to 12, characterized in that it contains at least one further thermoplastic polymer.

**14.** The film as claimed in any of claims 1 to 13, characterized in that it contains inorganic additives.

**15.** The film as claimed in any of claims 1 to 14, characterized in that it contains further organic additives to improve the film properties.

**16.** The film as claimed in any of claims 1 to 15, characterized in that it is comprised of several layers.

**17.** The film as claimed in any of claims 1 to 16, characterized in that the layers are comprised of different polymers.

**18.** The film as claimed in claim 16, characterized in that at least one of the layers contains a nucleating agent.

**19.** The film as claimed in claim 16, characterized in that all layers are extruded simultaneously.

**20.** The film as claimed in any of claims 1 to 19, characterized in that it is provided with a single- or double-sided coating comprising a solution or dispersion, whereby crosslinkable or crosslinked constituents may be contained in said solution or dispersion.

**21.** A process for the manufacture of a monoaxially or multiaxially stretched, heat-set film possessing good abrasion resistance and improved dimensional stability and stretchability, as claimed in any of claims 1 to 19, characterized in that the nucleating agent is mixed with the polymer containing the organic, preferably crosslinked or hardened particles, the resulting mixture is molten, extruded through a slot die to give a cast film, chilled on a chill roller, then subjected to monoaxial, simultaneous longitudinal and transverse or multiaxial stretching, and subsequently heat-set at temperatures between 150 and 240 °C.

**22.** Use of a film as claimed in any of claims 1 to 20 as a support film for magnetic recording materials, reprographic and photographic materials, electrofoils or embossing film.

**23.** Use of a film as claimed in claims 1 to 20 as a packaging film or part of a packaging film.

**Revendications**

**1.** Feuille de polyester ayant une résistance à l'abrasion, une stabilité dimensionnelle, une aptitude à l'étirage améliorées et de meilleures propriétés de glissement, qui contient 0,005 à 5,0% en poids de particules organiques, de préférence durcies ou réticulées, ayant une distribution granulométrique étroite, de Dp/Dn < 1,1, située dans le domaine de 0,01 à 5 $\mu$m, et un agent de nucléation en une quantité de 0,01 à 10% en poids, ces deux valeurs étant données par rapport au poids de polymère constituant la feuille.

**2.** Feuille selon la revendication 1, caractérisée en ce qu'on utilise, en tant qu'agent de nucléation, des sels alcalins ou alcalino-terreux de cires à esters ou de cires à esters partiellement saponifiées, par exemple de l'acide montanique, des copolymérisats ioniques d'éthylène et de sels alcalins d'acide méthacrylique, des sels alcalins d'acide phénolsulfonique, et/ou des agents de nucléation inorganiques.

**3.** Feuille selon la revendication 1 ou 2, caractérisée en ce qu'on utilise, en tant qu'agent de nucléation, du montanate de sodium et/ou des copolymérisats d'éthylène et de sels alcalins d'acide méthacrylique.

**4.** Feuille selon l'une des revendications 1 à 3, caractérisée en ce qu'elle contient 0,1 à 5% en poids d'agent de nucléation, par rapport au poids du polyester.

9

**5.** Feuille selon l'une des revendications 1 à 4, caractérisée en ce qu'elle contient des particules organiques durcies ou réticulées, de préférence à base d'une résine mélamine-formaldéhyde, d'une résine benzoguanamine-formaldéhyde, d'une résine phénol-formaldéhyde, d'une résine époxy ou d'un acrylate.

**6.** Feuille selon la revendication 5, caractérisée en ce que les particules sont préparées par polymérisation en suspension ou polymérisation en émulsion.

**7.** Feuille selon l'une des revendications 1 à 6, caractérisée en qu'elle est étirée monoaxialement.

**8.** Feuille selon l'une des revendications 1 à 6, caractérisée en qu'elle est étirée biaxialement ou multiaxialement.

**9.** Feuille selon l'une des revendications 1 à 6, caractérisée en qu'elle est thermofixée.

**10.** Feuille selon l'une des revendications 1 à 9, caractérisée en ce qu'elle est constituée d'un homo- ou d'un copolycondensat d'acide téréphtalique ou d'acide isophtalique avec des glycols comportant 2 à 10 atomes de carbone.

**11.** Feuille selon l'une des revendications 1 à 9, caractérisée en ce qu'elle est constituée de poly-(téréphtalate d'éthylène).

**12.** Feuille selon l'une des revendications 1 à 9, caractérisée en ce qu'elle est constituée d'un mélange de divers polyesters.

**13.** Feuille selon l'une des revendications 1 à 12, caractérisée en ce qu'elle contient au moins un polymère thermoplastique supplémentaire.

**14.** Feuille selon l'une des revendications 1 à 13, caractérisée en ce qu'elle contient des additifs inorganiques.

**15.** Feuille selon l'une des revendications 1 à 14, caractérisée en ce qu'elle contient des additifs organiques supplémentaires pour améliorer ses propriétés.

**16.** Feuille selon l'une des revendications 1 à 15, caractérisée en ce qu'elle est composée de plusieurs couches.

**17.** Feuille selon l'une des revendications 1 à 16, caractérisée en ce que les couches sont constituées de polymères différents.

**18.** Feuille selon la revendication 16, caractérisée en ce qu'au moins une couche contient un agent de nucléation.

**19.** Feuille selon la revendication 16, caractérisée en ce que toutes les couches sont extrudées en même temps.

**20.** Feuille selon l'une des revendications 1 à 19, caractérisée en ce qu'elle est recouverte, d'un côté ou des deux côtés, avec une solution ou une dispersion, la solution ou la dispersion pouvant contenir des composants réticulables ou réticulés.

**21.** Procédé pour préparer une feuille fixée, étirée monoaxialement ou multiaxialement, possèdant une bonne résistance à l'abrasion et une stabilité dimensionnelle et une aptitude à l'étirage améliorées selon l'une des revendications 1 à 19, caractérisé en ce qu'on mélange l'agent de nucléation avec le polymère contenant les particules organiques, de préférence réticulées ou durcies, puis on fait fondre le mélange, on l'extrude à travers une filière plate pour obtenir une feuille d'ébauche et on la refroidit sur un cylindre refroidisseur, et ensuite on l'étire monoaxialement, en même temps longitudinalement et transversalement, ou multiaxialement, et on effectue ensuite le thermofixage entre 150 et 240°C.

22. Utilisation d'une feuille selon les revendications 1 à 20 comme feuille support pour des matériaux d'enregistrement magnétique, pour usages reprographiques ou photographiques, comme feuille électriquement active ou feuille à grainer.

23. Utilisation d'une feuille selon les revendications 1 à 20 comme feuille d'emballage ou partie d'une feuille d'emballage.